# EUROPEAN PATENT APPLICATION

(11) **EP 3 214 597 A1**
(43) Date of publication of application: **06.09.2017**
(21) Application number: 15856152.2
(22) Date of filing: 26.10.2015
(51) Int. Cl.: G06Q 50/14, G06Q 30/02

(54) **INFORMATION PROCESSING DEVICE, INFORMATION PROCESSING METHOD, AND PROGRAM**

(30) Priority: 28.10.2014 JP 2014219694
(71) Applicant: Yamaguchi, Shonoshin, Koriyama-shi, Fukushima 963-8025 (JP)
(72) Inventor: Yamaguchi, Shonoshin, Koriyama-shi, Fukushima 963-8025 (JP)
(74) Representative: Ström & Gulliksson AB
(86) International application number: PCT/JP2015/080130
(87) International publication number: WO 2016/068084

(57) **Abstract**

The purpose of the present invention is to make it possible to offer plans from a perspective that a planner had not previously been aware of and to thereby provide attractive plan content to a user. Provided is an information processing device in which a plan reception means 61 receives input plan information 51-2 including a predetermined type of plan content from among plan content for n types of activities. A presentation means 63 subsequently controls the presentation of plan information 51-1 including information that is from a second type of plan content and that relates to a first type of plan content, said plan information 51-1 being presented to a planner who input the plan information 51-2 including the first type of plan content.

## Description

### TECHNICAL FIELD

The present invention relates to an information processing device, an information processing method and a program.

### BACKGROUND ART

Conventionally, organized trips planned by travel agencies are generally package tours in which transportation, accommodations and the like are set. In such package tours, the addition of optional tours such as sightseeing and sports is widely performed. Although in package tours, transportation, accommodations and even meal places are often fixed, and thus the range of traveler's choice is limited, the range of traveler's choice is extended by the performance of such optional tours (for example, see patent document 1).

Patent Document 1: Japanese Unexamined Patent Application, Publication No. 2012-252414

### DISCLOSURE OF THE INVENTION

### Problems to be Solved by the Invention

However, even optional tours are likewise planed by a planner, and thus a traveler selects optional tours under the constraints of the details of plans planed by the planner. Optional tours themselves planed by a planner may be unattractive, and thus a traveler may often be unsatisfied with them.

The present invention is made in view of the conditions described above, and has an object to make it possible to produce a plan from a perspective of which a planner has not previously been aware so as to provide details of a plan attractive for a user. Means for Solving the Problems

In order to achieve the above object, an information processing device according to an aspect of the present invention includes: a plan reception means which receives an input of plan information including details of a plan of a predetermined type among n types of details of plans of activities; and a presentation means which presents, to a person who inputs plan information including details of a plan of a first type, plan information including information related to the details of the plan of the first type among details of a plan of a second type.

In an information processing device according to another aspect of the present invention, the first type is a type of activity which has details of a plan that are closely connected to a specialized theme of a specific item, and the second type is a type of activity which has details of a plan such as a production area of a product, a place of sale or a place of presentation of a service that are closely connected to an area.

In an information processing device according to another aspect of the present invention, the first type is a type of activity which has details of a plan such as a production area of a product, a place of sale or a place of presentation of a service that are closely connected to an area, and the second type is a type of activity which has details of a plan that are closely connected to a specialized theme of a specific item.

An information processing device according to another aspect of the present invention, further includes: a participant information reception means which receives information on a participant who participates in the details of the plan of the second type, where the presentation means presents, to the person who inputs the plan information including the details of the plan of the first type, the information on the participant together with the plan information including the details of the plan of the second type.

An information processing method and a program according to an aspect of the present invention are a method and a program which correspond to the information processing device according to the aspect of the present invention described above.

### Effects of the Invention

According to the present invention, it is possible to produce a plan that has the details of the plan from a perspective of which the planner of the details of the plan has not previously been be aware.

### BRIEF DESCRIPTION OF THE DRAWINGS

Fig. 1 is a diagram showing the configuration of an information processing system according to an embodiment of the present invention;
Fig. 2 is a block diagram showing the hardware configuration of a server which is an embodiment of an information processing device of the present invention in the information processing system of Fig. 1;
Fig. 3 is a functional block diagram showing a functional configuration for performing activity planner SNS processing in the functional configuration of the server;
Fig. 4 is a diagram showing an example of the structure of plan information DB 71; and
Fig. 5 is a flowchart illustrating the flow of the activity planner SNS processing performed by the server of Fig. 2 having the functional configuration of Fig. 3.

### PREFERRED MODE FOR CARRYING OUT THE INVENTION

An embodiment of the present invention will be described below with reference to drawings.

### [Outline of information processing device]

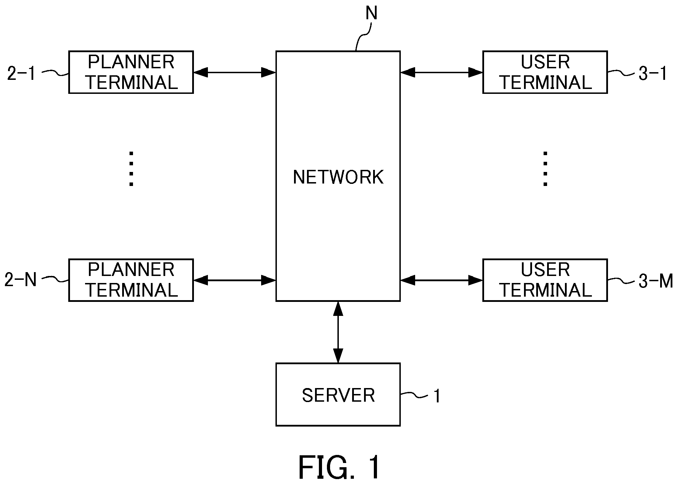

Fig. 1 is a diagram showing the configuration of an information processing system according to the embodiment of the present invention. The information processing system shown in Fig. 1 is configured by connecting a server 1, planner terminals 2-1 to 2-N and user terminals 3-1 to 3-M to each other through a network N.

The present information processing system is applied when a service is provided where a plurality of activities planned respectively by individual activity planners is combined as one tour and where the tour is presented to a user. The present service includes a service in which when a predetermined planner plans the details of the plan of a specific type of activity, another piece of plan information which includes an activity related to the specific type of activity is presented to the planner. The provider of the present service is assumed to manage the server 1. The management described here includes management which is directly managed by the provider itself and management which is indirectly managed such as by subcontracting the management to a separate party such as the management company of the server. The activity includes a so-called optional tour and refers to the details of actions of the user in a period of all the schedule of the travel of the user. One activity is planned by an arbitrary party which can contact the provider of the present service. In the following discussion, the party described above is referred to as a "planner". The planner may only plan an activity and may not participate in it or may participate in the activity as a guide or the like. In the present embodiment, N planners (N is an arbitrary integer value equal to or more than 1) are assumed to use the planner terminals 2-1 to 2-N, respectively. However, in the following description, when it is not necessary to individually distinguish the planner terminals 2-1 to 2-N, they are collectively and simply referred to a "planner terminal 2". In the present embodiment, M users (M is an arbitrary integer value which is independently of N and which is equal to or more than 1) are assumed to use the user terminals 3-1 to 3-M, respectively. However, in the following description, when it is not necessary to individually distinguish the user terminals 3-1 to 3-N, they are collectively and simply referred to a "user terminal 3".

The type of activity refers to a type which is classified according to the details of the plan of an activity (such as a location, a time and a price). Although as the types of activity, an arbitrary number of types of arbitrary combinations can be adopted, in the present embodiment, an artisan type, a production area type and a price type are adopted. The artisan type refers to the type of activity which has the details of a plan that are closely connected to a specialized theme of a specific item. For example, when "wine" is selected as the item, and "brand" is selected as the theme, the type of activity such as a tasting event (tour of such wineries) focused on the brand of cabernet sauvignon or the like applies to the artisan type. For example, when "railway" is selected as the item, and "car" is selected as the theme, the type of activity such as a tour (tour of such a maintenance site) focused on Shinkansen N700 (registered trademark) series cars applies to the artisan type. The production area type refers to the type of activity which has the details of a plan such as the production area of a product, the place of sale or the place of presentation of a service that are closely connected to an area. For example, when the area is "A" city which is famous as the production area of wine, the type of activity, such as the tour of wineries present within "A" city, that is closely connected to "A" city applies to the production area type. The price type refers to the type of activity focused on a price range. For example, the type of activity which is presented at a price of 10,000 to 20,000 yen or a price of 50,000 to 100,000 yen applies to the price type.

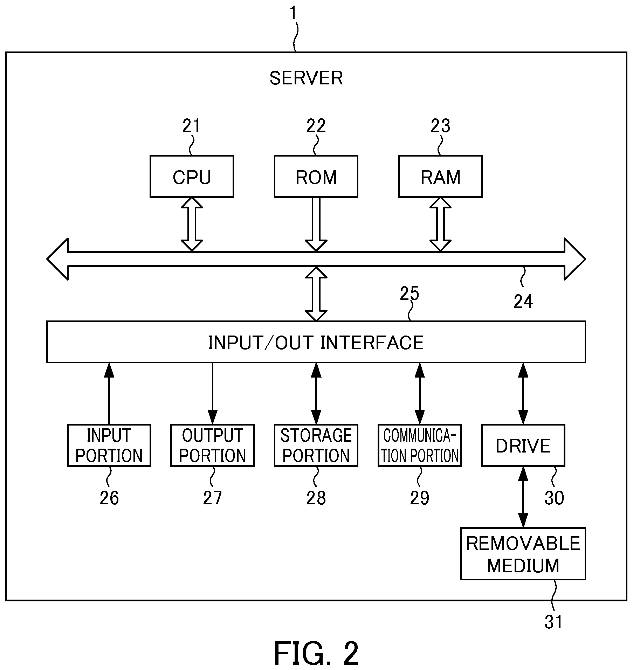

Fig. 2 is a block diagram showing the hardware configuration of the server 1 which is an embodiment of the information processing device of the present invention in the information processing system of Fig. 1.

The server 1 includes a CPU (Central Processing Unit) 21, a ROM (Read Only Memory) 22, a RAM (Random Access Memory) 23, a bus 24, an input/out interface 25, an input portion 26, an output portion 27, a storage portion 28, a communication portion 29 and a drive 30.

The CPU 21 performs various types of processing according to programs recorded in the ROM 22 or programs loaded from the storage portion 28 onto the RAM 23.

In the RAM 23, data and the like which are necessary for the CPU 21 to perform various types of processing are also stored as necessary.

The CPU 21, the ROM 22 and the RAM 23 are connected through the bus 24 to each other. The input/out interface 25 is also connected to the bus 24. The input portion 26, the output portion 27, the storage portion 28, the communication portion 29 and the drive 30 are connected to the input/out interface 25.

The input portion 26 is formed with a keyboard, various types of buttons and the like, and various types of information are input thereto according to the instruction operations of an operator. The output portion 27 is formed with a display, a speaker and the like, and outputs an image and a sound. The storage portion 28 is formed with a hard disk, a DRAM (Dynamic Random Access Memory) or the like, and stores various types of data. The communication portion 29 controls communication with other devices (in the example of Fig. 1, the planner terminal 2 and the user terminal 3) through the network N including the Internet.

A removable medium 31 which is formed with a magnetic disk, an optical disk, a magneto-optical disk or a semiconductor memory is fitted to the drive 30 as necessary. A program which is read by the drive 30 from the removable medium 31 is installed in the storage portion 28 as necessary. The removable medium 31 can also store, as in the storage portion 28, various types of data stored in the storage portion 28.

The CPU 21 of the server 1 configured as described above performs a series of processing steps in which a plan having the details of the plan of a first type of activity is received from a planner, and in which then plan information 51 including the details of the plan of a second type of activity related to the first type of activity is presented to the planner. In the following description, the processing described above is referred to as "activity planner SNS processing".

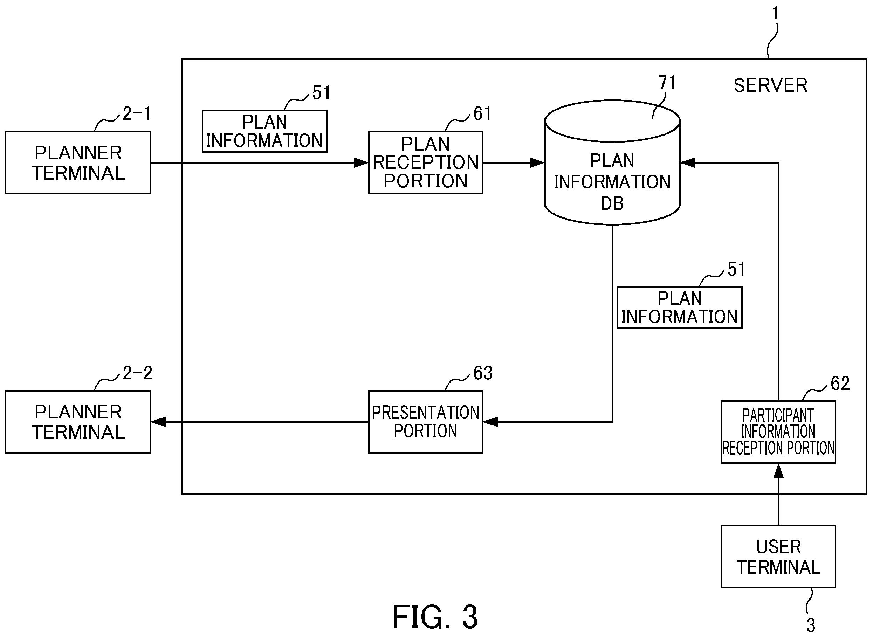

Fig. 3 is a functional block diagram showing a functional configuration for performing the activity planner SNS processing in the functional configuration of the server 1.

When the performance of the activity planner SNS processing is controlled in the CPU 21, a plan reception portion 61, a participant information reception portion 62 and a presentation portion 63 function. As a region of the storage portion 28, a plan information DB 71 is provided.

The plan information DB 71 is a database (DB) which holds, for each plan, plan information 51 including the details of the plan of the activity. The planner operates the planner terminal 2 to produce the plan information 51 on the plan of a predetermined activity, and transmits it to the server 1. The plan information 51 refers to information which indicates the details of the plan of an activity planed by an activity planner. As long as the plan information 51 includes the details of the plan of an activity, the ID of the plan, the type of activity and the planner ID of the plan, the form thereof, a storing method within the plan information DB 71 and the like are not particularly limited.

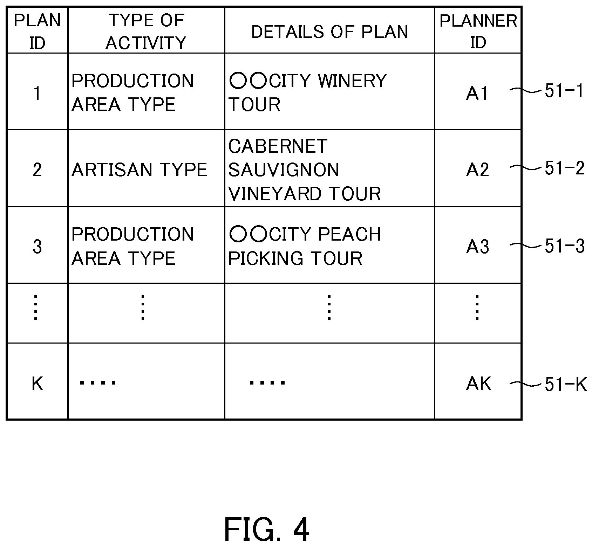

However, in the present embodiment, for example, the plan information DB 71 is assumed to have a structure shown in Fig. 4. Fig. 4 is a diagram showing an example of the structure of the plan information DB 71. As shown in Fig. 4, one row of the plan information DB 71 is associated with the plan of one activity. In other words, in the Kth row of the plan information DB 71 (K is an integer value equal to or more than 1), plan information 51-K on the plan of one activity is stored. The plan information 51-K includes a plan ID, the type of activity, the details of a plan and a planner ID.

The plan ID is an identifier for uniquely identifying a plan, and in the example of Fig. 4, for convenience, "K" is provided as the ID.

The type of activity is information which indicates the type of activity, and for example, in the plan information 51-1, the type of activity is the "production area type", in the plan information 51-2, the type of activity is the "artisan type" and in the plan information 51-3, the type of activity is the "production area type".

The details of the plan are information which indicates the details of the plan, and for example, in the plan information 51-1, the details of the plan are "**OO** city winery tour", in the plan information 51-2, the details of the plan are "cabernet sauvignon vineyard tour" and in the plan information 51-3, the details of the plan are "**OO** city peach picking tour". Since the details of the plan are presented to the user, not only the outline shown in Fig. 4 but also details can naturally be included.

The planner ID is an identifier for uniquely identifying a planner, and in the example of Fig. 4, for convenience, "AK" is provided as the ID.

With reference back to Fig. 3, the plan reception portion 61 receives the plan information 51 which the planner inputs to the planner terminal 2-1, and stores it in the plan information DB 71. For example, it is assumed that the planner inputs the details of the plan "cabernet sauvignon vineyard tour" to the planner terminal 2-1. In this case, the plan reception portion 61 receives, as the plan information 51-2, information in which the plan ID "2", the type of activity "artisan type" and the planner ID "A2" are allocated to the details of the plan. The plan reception portion 61 stores the received plan information 51-2 in the plan information DB 71.

The user operates the user terminal 3 so as to input, to the user terminal 3, participant information on the plan in which the user actually participates. The participant information reception portion 62 receives the participant information input by the user from the user terminal 3, and stores the received participant information reception in the plan information DB 71. For example, the user inputs, to the user terminal 3, participant information indicating that "since the stay time of xx winery is short, the stay time is desired to be extended" on the plan ID "1" in which the user actually participates. The participant information reception portion 62 receives, from the user terminal 3, the participant information indicating that "since the stay time of xx winery is short, the stay time is desired to be extended", and stores the received participant information in the plan information DB 71.

With predetermined timing after the plan information 51 on the details of the plan of the first type is received by the plan reception portion 61, the presentation portion 63 extracts, from the plan information DB 71, according to a predetermined algorithm, plan information 51 including the details of the plan of the second type related to the received first type among the details of the plan of the second type. Although here, the algorithm is not particularly limited, in the present embodiment, an algorithm is adopted in which keywords are extracted or selected with a morphological analysis or the like from the details of the plans of the first type and the second type, and in which whether or not the first type and the second type are related to each other is determined by whether or not their keywords agree with each other. For example, the plan reception portion 61 is assumed to receive the plan information 51-2 on the "artisan type" of the first type. The presentation portion 63 extracts, from the details of the plan of the "production area type" of the second type, the plan information 51-1 including information related to the received plan information 51-2 on the "artisan type" of the first type. Specifically, for example, the details of the plan in the plan information 51-2 of the "artisan type" are assumed to be the "cabernet sauvignon vineyard tour". In this case, as a keyword, "wine" is extracted from the "cabernet sauvignon", the "vineyard" and the like. Hence, as the plan information 51-1 on the "production area type" related to the "wine", for example, the plan information 51-1 including the tour of wineries present within "A" city is extracted and is presented to the user.

Although in the above example, for convenience of description, an example where the first type of activity is the "artisan type" and where the second type is the "production area type" is described, the types of activity are not limited to these types as described previously. For example, the first type of activity may be set to the "production area type", and the second type may be set to the "artisan type". It is needless to say that as the type of activity, the same processing can be performed on the "price type".

Furthermore, the presentation portion 63 recognizes the plan ID of the plan information 51 on the second type related to the first type so as to extract, from the plan information DB 71, participant information which agrees with the plan ID. For example, when the type of activity of the plan information 51-1 is the second type, since the plan ID of the plan information 51-1 is "1", the presentation portion 63 extracts, from the plan information DB 71, the participant information which has (agrees with) the plan ID "1" and which indicates that "since the stay time of xx winery is short, the stay time is desired to be extended".

The presentation portion 63 performs control such that the plan information 51 extracted as the second type and the participant information which has (agrees with) the plan ID of the plan information 51 on the second type extracted are presented to the planner terminal 2-2 to which the plan information 51 of the first type is input. For example, the presentation portion 63 performs control such that the plan information 51 extracted as the second type and the participant information "since the stay time of xx winery is short, the stay time is desired to be extended" which has (agrees with) the plan ID "1" are presented to the planner terminal 2-2 of the planner who inputs the plan information 51-2 of the plan ID "2", in this example, to the planner terminal 2-2 of the planner of the planner ID "A2".

The presentation method is not particularly limited. For example, it is possible to adopt a method of presenting the information which is posted on a web page managed by the server 1 when the planner accesses the web page through the planner terminal 2. For example, it is possible to adopt a method of presenting the information to the planner by transmitting electronic mail or the like to the planner terminal 2. It is possible to adopt various types of methods including, for example, a method in which the planner is made to install a dedicated application (software program) in the planner terminal 2 and in which thus the information is presented through the application.

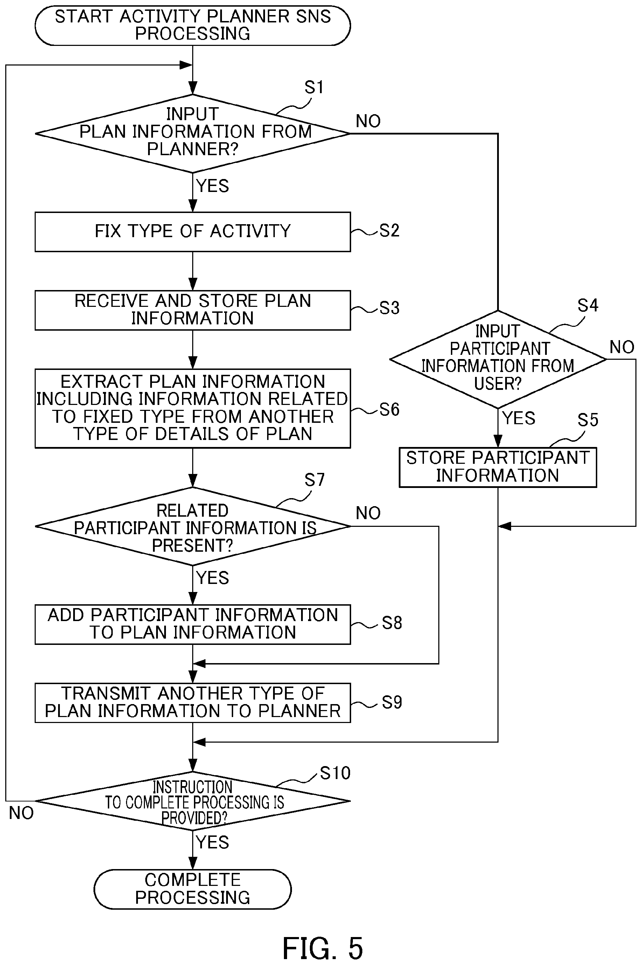

The activity planner SNS processing which is performed by the server 1 of Fig. 2 having the functional configuration of Fig. 3 as described above will then be described with reference to Fig. 5. Fig. 5 is a flowchart illustrating the flow of the activity planner SNS processing performed by the server 1 of Fig. 2 having the functional configuration of Fig. 3.

The activity planner SNS processing will be described below.

In step S1, the plan reception portion 61 of Fig. 3 determines whether or not the plan information 51 is input. When the plan information 51 is not transmitted from any of the planner terminals 2, a determination of no is made in step S1, and the process proceeds to step S4.

In step S4, the participant information reception portion 62 determines whether or not the participant information is input. When the participant information is not transmitted from any of the user terminals 3, a determination of no is made in step S4, and the process proceeds to step S10.

In step S10, the presentation portion 63 determines whether or not an instruction to complete the process is provided. The instruction to complete the process is not particularly limited, and for example, the turning off of the power supply of the server 1 can be adopted as the instruction to complete the process. In other words, for example, when the power supply of the server 1 is turned off, a determination of yes is made in step S10, and the activity planner SNS processing is completed. By contrast, for example, unless the power supply of the server 1 is turned off, a determination of no is made in step S10, the process is returned to step S1 and the subsequent process is repeated. In other words, unless the plan information 51 and the participant information are transmitted, a loop process is repeated in which a determination of no is made in step S1, in which a determination of no is made in step S4 and in which a determination of no is made in step S10.

For example, when the participant information is transmitted from the user terminal 3, a determination of yes is made in step S4, and the process proceeds to step S5. In step S5, the participant information reception portion 62 receives the participant information and stores it in the plan information DB 71. For example, here, it is assumed that the participant information indicating that "since the stay time of xx winery is short, the stay time is desired to be extended" is stored. Thus, the process proceeds to step S10, and the subsequent process is repeated.

For example, the plan information 51-2 is assumed to be transmitted from the planner terminal 2-1. In this case, a determination of yes is made in step S1, and the process proceeds to step S2. In step S2, the plan reception portion 61 receives the input plan information 51-2. Furthermore, based on the received plan information 51-2, the plan reception portion 61 fixes the "artisan type" as the type of activity. The type of activity (here, the "artisan type") may be previously determined before the processing in step S2 and may be included in the plan information 51-2. In this case, the type of activity (here, the "artisan type") which is included in the previously included plan information 51-2 may be fixed. Alternatively, the type of activity may not be included in the plan information 51-2 immediately before the processing in step S2. In this case, as part of the processing in step S2, the type of activity (here, the "artisan type") may be fixed with a predetermined algorithm. Then, before the completion of the processing in step S2, the type of activity (here, the "artisan type") may be included in the plan information 51-2.

In step S3, the plan reception portion 61 stores, in the plan information DB 71, the plan information 51-2 received in step S2.

In step S6, the presentation portion 63 extracts, from the plan information DB 71, the plan information 51-K on the second type related to the details of the plan of the fixed type (first type) fixed by the plan reception portion 61 in step S3 among the details of the plan of another type (second type).

For example, in the example described above, since in step S3, as the first type, the "artisan type" is fixed, as the second type, a type other than the second type, here, for example, the "production area type" is adopted. In other words, the presentation portion 63 extracts information related to the "artisan type" of the first type from among the details of the plan of the "production area type" of the second type. Here, it is assumed that the two pieces of information which are the plan information 51-1 where the type of activity of the second type is the "production area type" and where the details of the plan are the "**OO** city winery tour" and the plan information 51-3 where the details of the tour are the "**OO** city peach picking tour" have already been stored. In this case, the information which is related to the details of the plan "cabernet sauvignon vineyard tour" of the "artisan type" of the first type is, as described previously, the information where the keyword is the "wine", the plan information 51-1 applies to the information related thereto and the plan information 51-3 does not apply to the information related thereto. An algorithm as to whether or not the information applies to the information related thereto is not particularly limited, and an arbitrary algorithm may be adopted. Hence, in this example, the presentation portion 63 extracts the plan information 51-1 which has the details of the plan "**OO** city winery tour".

In step S7, the presentation portion 63 determines, based on the plan ID "K" of the plan information 51-K extracted in step S6, whether or not the participant information is present. For example, in the example described above, the plan information 51-1 is extracted in step S6. Hence, the presentation portion 63 extracts, from the plan information DB 71, the participant information which has the plan ID "1" of the plan information 51-1, that is, the participant information indicating that "since the stay time of xx winery is short, the stay time is desired to be extended".

In step S8, the presentation portion 63 adds the related participant information (participant information extracted in step S7) to the plan information 51-1 extracted in step S6. For example, in the example described above, the participant information indicating that "since the stay time of xx winery is short, the stay time is desired to be extended" is added to the plan information 51-1.

In step S9, the presentation portion 63 performs control such that the plan information 51-1 and the participant information are transmitted to the planner terminal 2-2 of the planner who inputs a planner ID "AK". In other words, the presentation portion 63 performs control such that the plan information 51-1 on the details of the plan "**OO** city winery tour" and the participant information indicating that "since the stay time of xx winery is short, the stay time is desired to be extended" are transmitted to the planner terminal 2-2 of the planner who inputs the plan information 51-2. In this way, the process proceeds to step S10, and the subsequent process is repeated.

In the example described above, the plan information 51-1 "**OO** city winery tour" is presented to the planner who plans the plan information 51-2 "cabernet sauvignon vineyard tour". Here, for example, although **OO** city is an area which is famous for the wine using the brand of grape "Koshu", a winery A is also present which manufactures the wine using the brand of grape "cabernet sauvignon", and the visit of the winery A is assumed to be incorporated in the plan of the plan information 51-1. In this case, for example, the planner of the "artisan type" can incorporate, in the next details of the plan "cabernet sauvignon vineyard tour", the winery A of which the planner has not previously been aware as a great spot.

The present invention is not limited to the embodiment described above, and variations, modifications and the like are included in the present invention as long as the object of the present invention can be achieved.

Specifically, an information processing device according to an aspect of the present invention includes: a plan reception means which receives an input of plan information including details of a plan of a predetermined type among n types of details of plans of activities; and a presentation means which presents, to a person who inputs plan information including details of a plan of a first type, plan information including information related to the details of the plan of the first type among details of a plan of a second type.

Although in the description of the above example, as the n types of activities, the first type is the artisan type and the second type is the production area type, there is no particular limitation on this configuration. For example, the first type may be set to the production area type, the second type may be set to the artisan type and the price type may be set as the type of activity in addition to the production area type and the artisan type. In this way, the details of the plan of the second type (which are related to the details of the plan of the first type), which are a different point of view, are presented to the planner (including a guide) of the details of the plan of the first type, and thus the planner can plan the preferred details of the plan of the first type from a perspective of which the planner has not previously been be aware.

Here, a configuration can be adopted in which
the first type is the artisan type (theme close connection type) and the second type is the production area type (area close connection type). In this case, it is possible to recommend the related plan information on the production area type to the planner (including a guide) of the activity of the artisan type. Consequently, the planner (including a guide) of the artisan type can obtain suggestions for new destinations and hosts.

Conversely, a configuration can be adopted in which
the first type is the production area type (area close connection type) and the second type is the artisan type (theme close connection type). In this case, it is possible to recommend the related plan information on the artisan type to the planner (including a guide) of the production area type. Consequently, the planner (including a guide) of the production area type can obtain suggestions for more interesting activities.

The information processing device may further include:
a participant information reception means which receives information on a participant who participates in the details of the plan of the second type, where the presentation means may present, to the person who inputs the plan information including the details of the plan of the first type, the information on the participant together with the plan information including the details of the plan of the second type.

Although in the example described above, the information on the participant is assumed to be the impressions of the participant and questionnaire results, there is no particular limitation on this assumption. For example, the information on the participant may be attributes such as the age, the gender and the occupation of the participant. Although in the description of the above example, the information on the participant presented to the planner is assumed to be the information on the participant whose plan ID agrees with the plan ID of the plan information 51 including the details of the plan of the second type, there is no particular limitation on this assumption. For example, the information on the participant whose travel area agrees with the travel area of the plan information 51 including the details of the plan of the second type may be presented to the planner. In this way, direct opinions from the participant of the plan having the details of the plan of the second type, which are a different point of view, are further presented to the planner (including a guide) of the details of the plan of the first type, and thus the planner can plan more preferred details of the plan of the first type.

The series of processing steps described above can be performed by hardware or can be performed by software. In other words, the functional configuration of Fig. 3 is only illustrative, and there is no particular limitation. Specifically, as long as the server 1 has the function of performing the series of processing steps described above as a whole, what types of functional blocks are used to achieve this function is not particularly limited to the example of Fig. 3. One functional block may be formed with hardware along, may be formed with software alone or may be formed with a combination thereof.

When the series of processing steps are performed by software, the programs of the software are installed in a computer or the like from a network or a recording medium. The computer may be a computer which is incorporated in dedicated hardware. The computer may be a computer which can perform various types of functions by installing various types of programs, and may be, for example, a general-purpose personal computer.

The recording medium including the programs described above is formed with the removable medium 31 of Fig. 2 which is distributed separately of the device main body in order to provide the programs to the user or is formed with a recording medium or the like which is provided to the user in a state where it is previously incorporated in the device main body. The removable medium 31 is formed with, for example, a magnetic disk (including a floppy disk), a Blu-ray (registered trademark) disc (Blu-ray disc), an optical disk, or a magneto-optical disk. The optical disk is formed with, for example, a CD-ROM (Compact Disk-Read Only Memory) or a DVD (Digital Versatile Disk). The magneto-optical disk is formed with, for example, an MD (Mini-Disk). The recording medium which is provided to the user in a state where it is previously incorporated in the device main body is formed with, for example, the ROM 22 of Fig. 2 where programs are recorded or a hard disk included in the storage portion 28 of Fig. 2.

In the present specification, a step of describing programs recorded in a recording medium includes not only processing which is performed sequentially and chronologically but also processing which is performed parallel or individually without being performed chronologically. In the present specification, the term of the system means an overall device which is formed with, for example, a plurality of devices or a plurality of means.

### EXPLANATION OF REFERENCE NUMERALS

1: server, 2, 2-1 to 2-N: planner terminal, 3, 3-1 to 3-M: user terminal, 21: CPU, 22: ROM, 23: RAM, 24: bus, 25: input/out interface, 26: input portion, 27: output portion, 28: storage portion, 29: communication portion, 30: drive, 31: removable medium, 51: plan information, 61: plan reception portion, 62: participant information reception portion, 63: presentation portion, 71: plan information DB

## Claims

1. An information processing device comprising:
a plan reception means which receives an input of plan information including details of a plan of a predetermined type among n types of details of plans of activities; and
a presentation means which presents, to a person who inputs plan information including details of a plan of a first type, plan information including information related to the details of the plan of the first type among details of a plan of a second type.

2. The information processing device according to claim 1,
wherein the first type is a type of activity which has details of a plan that are closely connected to a specialized theme of a specific item, and
the second type is a type of activity which has details of a plan such as a production area of a product, a place of sale or a place of presentation of a service that are closely connected to an area.

3. The information processing device according to claim 1,
wherein the first type is a type of activity which has details of a plan such as a production area of a product, a place of sale or a place of presentation of a service that are closely connected to an area, and
the second type is a type of activity which has details of a plan that are closely connected to a specialized theme of a specific item.

4. The information processing device according to any one of claims 1 to 3, further comprising:
a participant information reception means which receives information on a participant who participates in the details of the plan of the second type, wherein the presentation means presents, to the person who inputs the plan information including the details of the plan of the first type, the information on the participant together with the plan information including the details of the plan of the second type.

5. An information processing method which is performed by an information processing device, the information processing method comprising:
a plan reception step of receiving an input of plan information including details of a plan of a predetermined type among n types of details of plans of activities; and
a presentation step of presenting, to a person who inputs plan information including details of a plan of a first type, plan information including information related to the details of the plan of the first type among details of a plan of a second type.

6. A program which instructs a computer for controlling an information processing device to perform control processing, wherein the control processing includes:
a plan reception step of receiving an input of plan information including details of a plan of a predetermined type among n types of details of plans of activities; and
a presentation step of presenting, to a person who inputs plan information including details of a plan of a first type, plan information including information related to the details of the plan of the first type among details of a plan of a second type.
